# EUROPÄISCHE PATENTSCHRIFT

(11) **EP 2 763 574 B1**
(45) Veröffentlichungstag und Bekanntmachung des Hinweises auf die Patenterteilung: **30.09.2015**
(21) Anmeldenummer: 12783135.2
(22) Anmeldetag: 04.10.2012
(51) Int. Cl.: A47J 31/40, A47J 31/42

(54) **KAFFEEAUTOMAT UND VERFAHREN ZUM EINBRINGEN EINER BOHNENMENGE**
COFFEE MACHINE AND A METHOD FOR INTRODUCING A QUANTITY OF BEANS
MACHINE À CAFÉ ET PROCÉDÉ D'INTRODUCTION D'UNE QUANTITÉ DE GRAINS DE CAFÉ

(30) Priorität: 04.10.2011 DE 102011054166
(43) Veröffentlichungstag der Anmeldung: 13.08.2014
(73) Patentinhaber: Miele & Cie. KG, 33332 Gütersloh (DE)
(72) Erfinder: RIESSBECK, Wolfgang, CH-8597 Landschlacht (CH); WÄGER, Simon, CH-8580 Amriswil (CH)
(86) Internationale Anmeldenummer: PCT/EP2012/069669
(87) Internationale Veröffentlichungsnummer: WO 2013/050504

(56) Entgegenhaltungen:
- EP-A1- 0 424 326
- WO-A1-2008/105017
- DE-U1-202011 005 003

## Beschreibung

Die vorliegende Erfindung betrifft einen Kaffeeautomaten nach dem Oberbegriff des Hauptanspruchs, wie er aus der EP 0 424 326 A1 bekannt ist. Ferner betrifft die vorliegende Erfindung ein Verfahren zum Betreiben eines gattungsgemäßen Kaffeeautomaten.

Derartige Kaffeeautomaten, nachfolgend auch als Kaffee-Vollautomaten bezeichnet, sind aus dem Stand der Technik allgemein bekannt und setzen in Bohnenbehältern enthaltene Kaffeebohnen nach Mahl- und Brühschritten durch entsprechend zugeordnete Funktionseinheiten in ein trinkfähiges Kaffeegetränk um. Dabei erfolgt, typischerweise als Reaktion auf eine Auswahl aus einer Mehrzahl von möglichen Kaffeebohnensorten (einer entsprechend zugeordneten Mehrzahl von Bohnenbehältern), die weitere Verarbeitung bis zum trinkfähigen Heißgetränk automatisch, ohne dass eine Bedienperson in diesen Ablauf eingreifen muss.

Die Qualität des trinkbereiten, mit einer solchen Vorrichtung erfolgten Produktes wird dabei nicht nur von der verwendeten Bohnensorte (bzw. dessen Bedingungen, etwa Frische, Feuchtigkeitsgehalt od. dgl.), bestimmt, auch sind die nachfolgenden Verarbeitungsschritte Mahlen und Brühen kritisch für den Geschmacks- und damit Qualitätseindruck des mit dem gattungsgemäßen Kaffeeautomaten bereiteten Getränks.

So bestimmt etwa die Menge von in das Mahlwerk einer Mahleinheit eingebrachten Kaffeebohnen diesen Geschmackseindruck, so dass im Rahmen des Kaffee-Vollautomaten der Fördervorgang der (noch ungemahlenen) Kaffeebohnen aus einem ausgewählten einer Mehrzahl von Bohnenbehältern zum (typischerweise gemeinsamen) Mahlwerk der Mahleinheit ein kritischer, geeignet apparativ einzurichtender Prozess ist.

Aus dem Stand der Technik ist es dabei bekannt, Kaffeebohnenbehälter umschaltbar auszugestalten, wie es etwa in der DE 20 2008 001 749 U1 der Anmelderin beschrieben ist. In hier konstruktiv besonders elegant und kompakt gelöster Weise wird mittels manuell betätigbarer Auswahlmittel zwischen den die jeweils gewünschte Bohnensorte bereitstellenden Behältern ausgewählt, und entsprechend einer Auswahlposition der Auswahlmittel erfolgt dann das Freigeben eines betreffenden Auslasses eines gewählten Bohnenbehälters zum Mahlwerk. Dieses wird entsprechend einlassseitig mit den Bohnen gefüllt und in einen Mahlbetrieb angesteuert, so dass ausgangsseitig der Mahleinheit dann brühfähiges Kaffeepulver (der ausgewählten Bohnensorte) zur Verfügung steht.

Eine derartige, als gattungsbildend vorausgesetzte Technologie hat sich als robust und großserientauglich bewährt, gleichzeitig gibt es zumindest in zweifacher Hinsicht Nachbesserungspotenzial: Zum Einen erfolgt, wie beschrieben, die Auswahl der zur Mahleinheit (im Wesentlichen im Wege einer Schütteinheit als Fördermittel) zu bringenden Bohnensorte durch manuelle Betätigung eines Umschalters; hier ist eine Automatisierung (im Rahmen des konstruktiven Prinzips) nur mit erhöhtem Aufwand möglich. Zudem, als zweiter Problemkomplex, entstehen nachteilige Zwischen- bzw. Totmengen an Kaffeebohnen im Einlassbereich der Mahleinheit beim Umschalten, mit dem Ergebnis, dass die Mahleinheit typischerweise noch einen Rest an Bohnen einer vorab gewählten Sorte vermahlen muss, bevor dann die eigentlich ausgewählten Bohnen (einer anderen Sorte eines anderen Behälters) nachrutschen.

Da zudem die eigentliche Dosierung des Kaffeemehls durch eine geeignete Zeitvorgabe bzw. Zeitsteuerung eines Mahlbetriebs der Mahleinheit erfolgt, ist gerade bei häufig wechselnder Wahl der Bohnenbehälter ein durch die Mahleinheit ausgebrachtes und nachfolgend dann zu verbrühendes Kaffeemehl nicht rein entsprechend der diesbezüglich gewählten Sorte; vielmehr sind teilweise sogar mehrere Brühvorgänge erforderlich, bis tatsächlich auch im Hinblick auf das Ausgangsprodukt der Mahleinheit die eingangs vorhandenen Rest- bzw. Totvolumina der Bohnen aufgebraucht sind.

Im Ergebnis zeigen als gattungsbildend vorausgesetzte Kaffeeautomaten Nachteile bei der Sortentreue des ausgewählten Kaffeemehls, insbesondere bei häufig wechselnden Bohnensorten aus jeweils verschiedenen Bohnenbehältern.

Aufgabe der vorliegenden Erfindung ist es daher, einen gattungsgemäßen Kaffeeautomaten sowohl im Hinblick auf die Automatisierbarkeit der Auswahl verschiedener Bohnenbehälter für das Eintragen von Bohnen in eine gemeinsame Mahleinheit zu verbessern, als auch eine sortenreine Portionierung von Bohnen in die Mahleinheit sicherzustellen bzw. ein sortenrein gemahlenes Mehl für eine jeweils ausgewählte Kaffeeportion des Kaffeeautomaten sicherzustellen. Dabei soll die zu findende Lösung konstruktiv einfach in der Herstellung, damit robust im Dauerbetrieb und verschleißarm sein. Ferner sind entstehende Stäube oder dergleichen zu minimieren, so dass zusätzlich die Reinigungsanforderungen an einen solchen verbesserten Kaffeeautomaten herabgesetzt werden können.

Die Aufgabe wird durch den Kaffeeautomaten mit den Merkmalen des Hauptanspruchs 1 gelöst, vorteilhafte Weiterbildungen der Erfindung sind in den Unteransprüchen 2-13 beschrieben.

Ferner wird die vorliegende Erfindung durch das Verfahren nach dem unabhängigen Anspruch 14 gelöst.

In erfindungsgemäß vorteilhafter Weise ist für die als Dosiereinheit ausgebildeten Fördermittel eine stationäre Dosierkammer veränderlichen Kammervolumens vorgesehen, deren Bohnen-Dosiervolumen durch einen der Dosierkammer zugeordneten, in eine variable Eintragsposition bewegbaren Wandabschnitt einstell- und/oder bestimmbar ist. Dabei ist es sowohl von der Erfindung vorgesehen, die Mehrzahl der Bohnenbehälter (beziehungsweise die daraus herangeführten, typischerweise verschiedenen Bohnensorten) einer einzelnen, für alle Bohnensorten gemeinsamen Dosierkammer zuzuordnen. Alternativ und gleichermaßen bevorzugt im Rahmen der Erfindung ist es, im Rahmen der erfindungsgemäßen Dosiereinheit eine Mehrzahl von Dosierkammern entsprechend der Mehrzahl der Bohnenbehälter so vorzusehen, dass jeder der Bohnenbehälter die darin enthaltene Sorte einer zugeordneten Dosierkammer zuführt, welche wiederum in der erfindungsgemäßen Weise, stationär und mit veränderlichem Kammervolumen eingerichtet ist.

In erfindungsgemäß vorteilhafter Weise ermöglicht nunmehr der erfindungsgemäß in die variable Eintragsposition bewegbare Wandabschnitt, nicht nur durch die damit ermöglichte Einstellbarkeit, das Bohnen-Dosiervolumen vorwähl- bzw. vorbestimmbar zu gestalten (in dem nämlich der Wandabschnitt an eine vorbestimmte Position bewegt wird). Auch ermöglicht es die Antriebseinheit vorteilhaft, nach erfolgtem Eintragen die Austragsmittel zu realisieren, nämlich den Wandabschnitt erfindungsgemäß aus der Eintragsposition zu bewegen und, durch Einwirkung auf das eingetragene Bohnen-Dosiervolumen, in der Art eines Dosierkolbens, dieses aus einem Auslass der Dosierkammer zur Mahleinheit aufzubringen und damit die Dosierkammer zu entleeren.

Vorteilhaft gestattet es die Erfindung damit, dass nun diese vorbestimmte Bohnenmenge (das erfindungsgemäße "Bohnen-Dosiervolumen"), entsprechend der variablen Wandpositionierung in der Eintragsposition, gesamthaft zur Mahleinheit gelangt und vollständig und restlos vermahlen werden kann. Damit liegt dann auch am Ausgang der Mahleinheit ein sortenreines Kaffeemehlprodukt vor. Zusätzlich ergibt sich vorteilhaft, dass durch die feststehende, der Mahleinheit zugeführte Bohnenmenge eine aufwändige, prozesstechnisch nur schwierig beherrschbare Steuerung etwa einer Dauer des Vermahlens zur Dosierung einer Menge gewünschten Kaffeemehls entfällt; diese Menge ist durch das Bohnen-Dosiervolumen vorgegeben, und die Mahleinheit muss lediglich (prozesstechnisch wesentlich einfacher im Betrieb und in der Ansteuerung) so lange betrieben werden, bis die dem jeweils eingestellten Bohnen-Dosiervolumen entsprechende Charge vollständig vermahlen ist.

Im Ergebnis gestattet die vorliegende Erfindung damit in überraschend einfacher und kontrollierter Weise das Bereitstellen und Verarbeiten sortenreiner Kaffeebohnen (als Grundlage für ein nachfolgendes Vermahlen) beziehungsweise entsprechend sortenreinen Kaffeemehls am Ausgang der Mahleinheit, wobei zusätzlich vorteilhaft, die aus dem Stand der Technik beschriebenen Zwischen- bzw. Totvolumina effektiv vermieden werden können. Das Ergebnis ist eine deutlich erhöhte Prozess- und Geschmacksqualität des resultierenden gebrühten Kaffees. Insbesondere Geschmacksvariationen im Übergangsbereich zwischen zwei aufeinander folgend ausgewählten Bohnentypen können wirksam verhindert werden, und die vorliegende Erfindung ermöglicht zusätzlich durch die chargenweise, in sich geschlossene und portionsweise dimensionierte Bestimmung des Bohnen-Dosiervolumens eine verbesserte Automatisierbarkeit und Prozesssteuerung.

Dabei nimmt die vorliegende Erfindung bewusst den scheinbaren Nachteil in Kauf, dass vor dem Beginn des Vermahlens zunächst Bewegungs- und Fördervorgänge zur erfindungsgemäßen Portionierung erfolgen müssen, insoweit die mögliche Prozesszeit verlängern. Gleichzeitig ermöglicht die vorliegende Erfindung durch die größere Flexibilität und Kontrollierbarkeit des Prozesses an den verschiedenen beteiligten Einheiten eine Optimierung des Gesamtergebnisses.

Da zudem etwa das erfindungsgemäße Austragen aus einer (jeweiligen) Dosierkammer zur Mahleinheit in der Austragsposition Schwerkrafteffekte nutzt, also etwa ein Schütten bzw. Gleiten entlang einer schiefen Ebene oder dergleichen nutzt, weiterbildungsgemäß zusätzlich auch das Eintragen des Bohnen-Dosiervolumens in die (betreffende) Dosierkammer an der Eintragsposition entsprechende Schwerkraftwirkung nutzt, lässt sich so in äußert kompakter und damit nutzungsfreundlicher Weise eine schlanke Anordnung realisieren, welche (etwa motorisch) anzutreibende Teile minimiert, zusätzliche Residuen des Transportprozesses, etwa Stäube oder dergleichen der Kaffeebohnen, stets abwärts in Richtung auf die Mahleinheit und in diese hineinleitet, Verschmutzungen minimiert und entsprechend, praktisch bedeutsam, Reinigungs- und Wartungsaufwand verringert.

Praktisch besonders bedeutsam ist die vorliegende Erfindung im Zusammenhang mit der unmittelbaren Portionierung von Kaffee zu trinkfertigen Volumina, etwa zur unmittelbaren Bereitung einer Tasse oder einer Doppeltasse des gewünschten Kaffees, wobei erfindungsgemäß besonders günstig Bohnenmengen im Bereich zwischen 4g und 40g, insbesondere dann zwischen 7g und 20g, zur Bereitung derartiger Kaffeeportionen weiterbildungsgemäß günstig verarbeitet werden können.

Erfindungsgemäss ist, vorgesehen, den bewegbaren Wandabschnitt kolbenartig zu gestalten, wobei besonders bevorzugt dieser die Dosierkammer (zumindest im Hinblick auf Kaffeebohnen als Füllgut) dichtet, so dass damit der erfindungsgemäße Zweck einer Dosierkammerbegrenzung einerseits, und als Austragsmittel andererseits, praktisch sinnvoll realisierbar ist. Dabei ist weiter bevorzugt die Dosierkammer zumindest abschnittsweise hohlzylindrisch ausgebildet, wobei einends stirnseitig dann eine Öffnung als zur Mahleinheit geöffneter Auslass gestaltet sein kann, dem gegenüberliegend der bewegbare kolbenförmige Wandabschnitt so zugeordnet ist, dass zum Austragen dieser Wandabschnitt die Dosierkammer bis zum Auslass durchquert.

Im Rahmen einer bevorzugten Weiterbildung sind dem Auslass der Dosierkammer Verschlussmittel zugeordnet. Diese bewirken vorteilhaft, dass in der Eintragsposition und während eines Eintrags von Kaffeebohnen in dieser Eintragsposition diese nicht unbeabsichtigt aus dem Auslass zur Mahleinheit austreten, damit kann dann das Bohnen-Dosiervolumen genau bestimmt werden und ist lediglich von der (variablen) Position des Wandabschnitts in der Eintragsposition abhängig. In der vorteilhaften Weiterbildung sind diese Verschlussmittel, etwa mittels einer geeigneten Federanordnung (welche zusätzlich weiterbildungsgemäß auch, bei einer Mehrzahl von jeweils zu verschließenden Auslässen einer Mehrzahl von Dosierkammern, gemeinsam für diese wirkt) mittels einer Feder oder dergleichen Kraftspeicher realisiert, wodurch dann, zum Sperren des Auslasses in der Eintragsposition, einerseits eine das unbeabsichtigte Austreten von Kaffeebohnen verhindernde Gegenkraft auf den Auslass gebracht wird, andererseits dann diese Gegenkraft so bemessen ist, dass beim Austragen des Bohnen-Dosiervolumens durch den bewegbaren Wandabschnitt diese Feder-Gegenkraft überwunden wird und entsprechend derweiter bevorzugt der klappenartig verschlossene Auslass freigegeben wird.

Besonders vorteilhaft und konstruktiv elegant wird die Variante der Erfindung, wonach der Mehrzahl der Bohnenbehälter eine entsprechende Mehrzahl volumenveränderlicher, stationärer Dosierkammern zugeordnet ist, dadurch realisiert, dass die Dosierkammern jeweils zylinderartig ausgebildet und, mit jeweiligen Auslässen, aufeinander und zu einem gemeinsamen Zuleitungsabschnitt gerichtet sind, welchem wiederum die Mahleinheit nachgeschaltet ist.

Besonders bevorzugt ist es dann bei dieser Variante, die Antriebseinheit so auszugestalten, dass die Mehrzahl der bewegbaren Wandabschnitte, entsprechend der Mehrzahl der Dosierkammern, gemeinsam zugeordnet ist und, weiter bevorzugt, mit einer einzelnen motorischen Einheit, etwa einem geeignet ansteuerbaren Schrittmotor, versehen ist.

Etwa für eine Realisierung des Kaffeeautomaten mit zwei Bohnenbehältern und entsprechend diesen zugeordneten zwei volumenveränderlichen Dosierkammern mit jeweils bewegbarem Wandabschnitt wird der gemeinsamen Antriebseinheit eine Kurvenscheibe zugeordnet, welche mit beiden der bewegbaren Wandabschnitte zusammenwirkt und so durch Antrieb mit einer motorischen Einheit beide Wandabschnitte antreiben kann. Da in der Realisierung der vorliegenden Erfindung durch die Selektion eines der Bohnenbehälter als Quelle auch lediglich eine der Dosierkammern für die Chargierung benötigt wird, ist insoweit dann die gleichzeitige Bewegung der jeweils anderen, auch angetriebenen Dosierkammer unerheblich. Entsprechend lässt sich, durch Antrieb der Kurvenscheibe etwa in einander entgegengesetzte Drehrichtungen entsprechend einer jeweils aktiven Dosierkammer (mit dort anzutreibendem Wandabschnitt) diese komplexe Antriebsaufgabe in einfacher und eleganter Weise lösen.

Vorteilhaft ermöglicht es zudem die Erfindung, dass Schüttvorgänge zwischen den einzelnen Funktionseinheiten (Bohnenbehälter, Dosiereinheit, Mahleinheit, dann Brüheinheit) stattfinden, so dass insbesondere auch Stäube oder dergleichen Reststoffe aus dem Bohnenbehälter beziehungsweise der Dosiereinheit zur Mahleinheit geführt werden und nicht unbeabsichtigt und verschmutzungsträchtig austreten.

Vorteilhaft enthält die Mahleinheit gemäß der Erfindung eine vorbestimmte und begrenzte Menge ("Bohnen-Dosiervolumen") an Kaffeebohnen, vorteilhaft sortenrein (entsprechend dem jeweiligen Inhalt des Bohnenbehälters), unvermengt und ohne Restvolumina anderer Bohnensorten. Entsprechend ist es weiterbildungsgemäß vorteilhaft vorgesehen, die Mahleinheit so anzusteuern, dass die zugeführte Bohnenmenge vollständig vermahlen wird, wobei insbesondere die gattungsgemäße Feinsteuerung (etwa bezogen auf eine genaue Mahldauer, eine Anzahl von Messer-Umdrehungen oder dergleichen) unnötig wird, mithin der Steuerungsaufwand deutlich vermindert ist. So ist es in der konstruktiv-praktischen Realisierung etwa bevorzugt, das vollständige Vermahlen der zugeführten Charge durch Beobachten des Motorstroms des Mahlwerk-Motors als Parameter vorzusehen; ein Abfallen des Motorstroms würde (nach dem Vermahlen der letzten Kaffeebohne) das vollständige Vermahlen und damit Entleeren des Mahlwerks signalisieren und etwa zum Deaktivieren des Mahlwerks führen können.

In zusätzlich vorteilhafter Weise wird weiterbildungsgemäß eine für einen gleichbleibenden Qualitätseindruck konstante Kaffeemehlmenge dadurch erreicht, dass ausgangsseitig der Mahleinheit Mittel zum Erfassen eines Mengenparameters der gemahlenen Bohnen (also des Kaffeemehls) vorgesehen sind. Typischerweise handelt es sich dabei um Mittel zum Erfassen eines Kaffeemehlvolumens (wobei jedoch alternativ, etwa über geeignete Wägemittel, auch das Erfassen eines Gewichts einer solchen beschränkten Kaffeemehlmenge möglich ist). Diese Erfassungsmittel erzeugen aus dem Erfassungsergebnis (also etwa aus einem erfassten Mehlvolumen) das erfindungsgemäße Erfassungssignal, welches über die erfindungsgemäßen Steuermittel so zu den erfindungsgemäßen Dosiermitteln (also der erfindungsgemäßen Dosiereinheit) geschleift (rückgekoppelt) ist, dass das mengenmäßige Ergebnis eines (vorhergehenden) Mahlvorgangs, verglichen mit einem Vergleichswert (als geeignetem, gewünschtem Sollwert für das benötigte Mehlvolumen), Grundlage für eine nachfolgend zu vermahlende Menge an Kaffeebohnen ("Bohnen-Eintragungsmenge" = "Bohnen-Dosiervolumen") ist. Dabei bildet sich im Optimalfall ein Regelsystem heraus, welches, über aufeinanderfolgende Chargen zu einer dem Sollwert entsprechenden konstanten Menge an Kaffeemehl ausgangsseitig der Mahleinheit führt, selbst wenn sich die Kaffeebohnensorte oder andere Bedingungen ändern.

Weitere Vorteile, Merkmale und Einzelheiten der Erfindung ergeben sich aus der nachfolgenden Beschreibung bevorzugter Ausführungsbeispiele sowie anhand der Figuren; diese zeigen in:
- Fig. 1: eine perspektivische Schnittansicht eines Paares von Bohnenbehältern mit einem zugeordneten Paar von Dosierkammern als Dosiereinheit des Kaffeeautomaten gemäß einem ersten bevorzugten Ausführungsbeispiel der Erfindung;
- Fig. 2, Fig. 3: Schemadarstellungen analog Fig. 1 zum Verdeutlichen des Eintragens bzw. Portionierens einer Bohnencharge in eine erste der Dosierkammern (Fig. 2) sowie nachfolgendes Austragen dieser Charge (Fig. 3) aus einem Auslass zu einer nachgeschalteten Mahleinheit;
- Fig. 4: eine Draufsicht auf eine Kurvenscheibe als Beispiel für das gemeinsame Betreiben von Wandabschnitten der Dosierkammern im Ausführungsbeispiel der Fig. 1 - 3;
- Fig. 5: schematische Darstellungen einer jeweiligen Wand-(Kolben-)Position des Paares der Dosierkammern zusammen mit einer zugehörigen Position der Steuerscheibe gemäß Fig. 4 sowie schematisch dargestelltem, die Steuerscheibe antreibenden Antriebsmotor; und
- Fig. 6: ein Flussablaufdiagramm mit einer Abfolge von Verfahrensschritten eines erfindungsgemäßen Verfahrens zum Einbringen einer vorbestimmten Bohnenmenge in das Ausführungsbeispiel der Fig. 1 - 5.

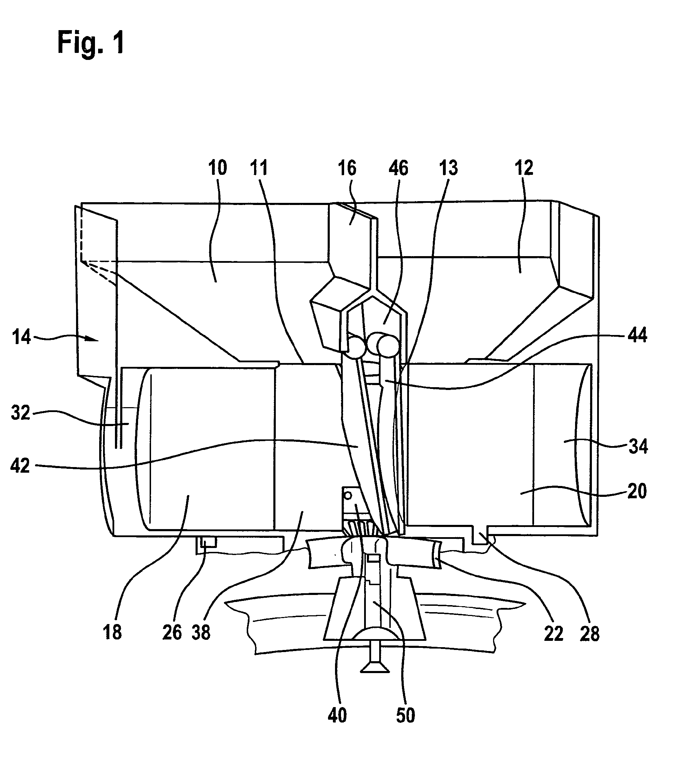

Die Strukturdarstellung der Fig. 1 verdeutlicht wesentliche konstruktive Baugruppen sowie deren Zusammenwirken zum Realisieren des Kaffeeautomaten gemäß einem ersten Ausführungsbeispiel der Erfindung, in der Darstellung der Fig. 1 beschränkt auf ein Paar von Bohnenbehältern 10, 12 (für eine jeweils daraus zu dosierende Bohnenmenge A bzw. B), wobei diese Bohnenkammern in einem als Kunststoff-Spritzgießteil gebildeten Gehäuse 14 mit einer zwischenliegenden Trennwand 16 eingeformt sind.

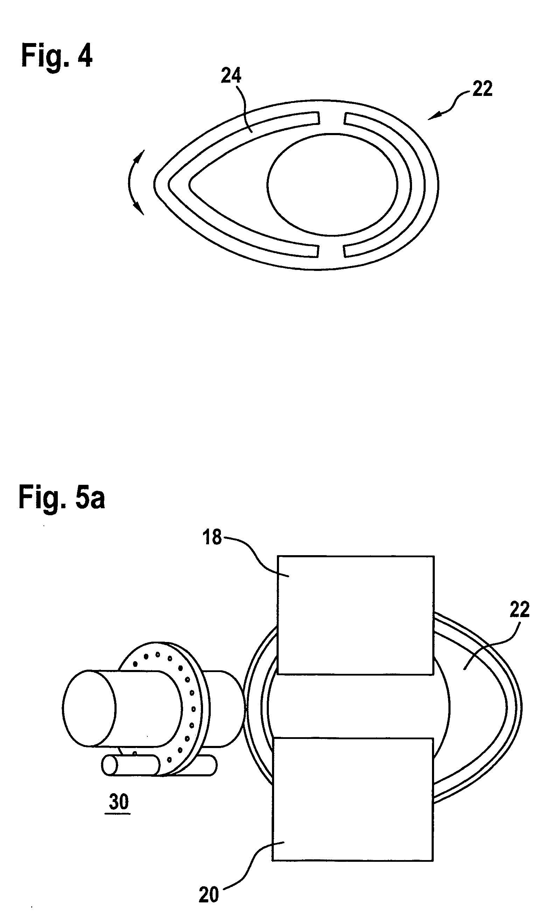

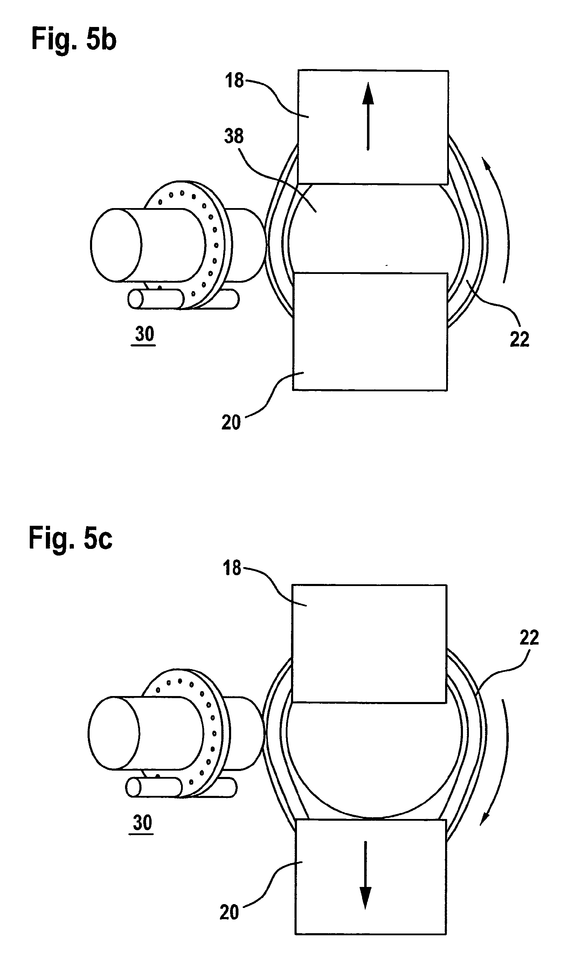

Der Gehäusekörper 16, in der Zeichendarstellung und in einer praktischen Realisierung unterhalb der Bohnenbehälter 10, 12, bildet ferner eine i. W. hohlzylindrische Führung für ein Paar von Kolbeneinheiten 18, 20 aus, welche in der in Fig. 1 gezeigten Weise horizontal und aufeinander gerichtet bewegbar sind; ein (gemeinsames) Antreiben beider Zylinder 18, 20 erfolgt über eine Kurvenscheibe 22 (Fig. 4), welche unterhalb des Gehäuses 14 vorgesehen und mit einer umlaufenden Nut 24 so ausgebildet ist, dass in diese Mitnehmerabschnitte 26 und 28 der Kolben 18 bzw. 20 eingreifen können. In in der Fig. 5 schematisch gezeigter Weise greift ein elektromotorischer Antrieb 30 mittels eines Ritzels randseitig an eine Außenverzahnung der Kurvenscheibe 22 zum Bewegen derselben an.

Die in jeweiligen Kammerabschnitten 32, 34 i. W. horizontal bewegbaren Kolben 18 bzw. 20 legen, je nach horizontaler Vorschubposition, einen Raum im Gehäuse 14 frei, welcher, in der Wirkung als Dosierkammer, zu einem jeweils zugehörigen Auslass 11 (des ersten Bohnenbehälters 10) bzw. 13 (des zweiten Bohnenbehälters 12) so geöffnet ist, dass entlang schräger Bodenflächen der Bohnenbehälter 10, 12 dort aufgenommene Kaffeebohnen durch die Öffnungen 11 bzw. 12 in unterliegende, durch jeweilige Kolbenposition volumenveränderliche Dosierkammern (in Fig. 1 exemplarisch die Kammer 38) rutschen können.

Es zeigt sich, dass damit, je nach horizontaler Verschiebeposition eines jeweiligen der Kolben 18, 20 dieser Dosierraum, welcher zudem im Hinblick auf einen mittleren, gemeinsamen Auslass bzw. Austrittsbereich 40 verschlossen wird von einem Paar einer jeweiligen Dosierkammer zugeordneten Federklappen 42, 44 (vorgespannt von einer gemeinsamen, oberen und am Gehäuse festgelegten Federanordnung 46) ein jeweiliges Dosiervolumen bestimmt werden kann durch das Bewegen eines der Kolben 18, 20 in die jeweilige horizontale Auslenkung; entsprechend lässt sich durch geeignetes Ansteuern der Motoreinheit 30 (welcher, wie in der Fig. 5 angedeutet, mit einer optischen Absolut-Codiereinheit zur exakten und reproduzierbaren Positionierung der Kurvenscheibe, 22 versehen ist) dann die Öffnungsweite einer jeweiligen Dosierkammer und mithin eine dieser Öffnungsweite entsprechende Kaffeemenge bestimmen.

Durch nachfolgendes Antreiben des betreffenden Kolbens in Richtung auf den Auslass (d.h. den durch die Klappen 42 bzw. 44 gebildeten Klappenbereich) lässt sich daraufhin dann die durch Schütten aus einem der obenliegenden Bohnenbehälter 10, 12 eingetragenen Bohnenmenge dosiert austragen: So führt, am Beispiel einer in das Dosierkammervolumen 38 eingetragenen Kaffeemenge für den linksseitigen Kolben 18 der Fig. 1, eine Rechtsbewegung dieses Kolbens zu einer Kraftbeaufschlagung der (hier nicht gezeigten) Kaffeebohnen, mit der Wirkung, dass in der gezeigten Weise die linksseitige Federklappe 42 in eine Öffnungsstellung überführt wird und die Dosierkammer 38 zum Mittelbereich 40 und daraus dann abwärts gerichtet zu einer bodenseitigen Zuführung 50 der (nicht gezeigten) Mahleinheit öffnen kann.

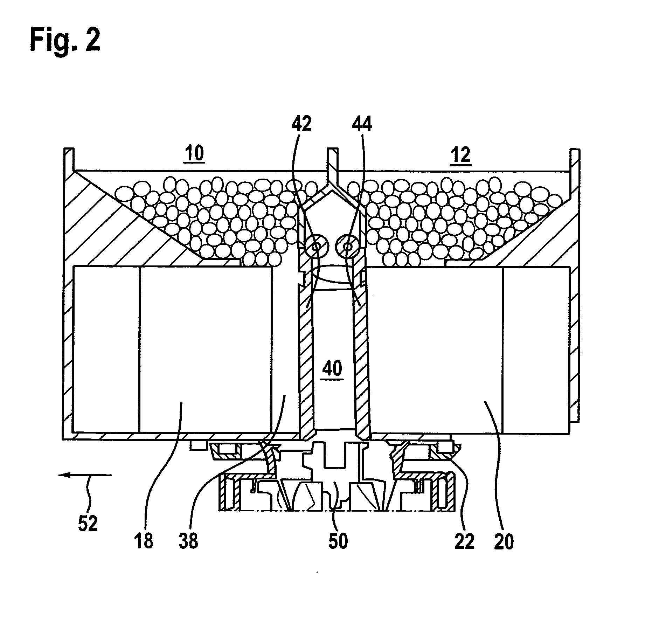

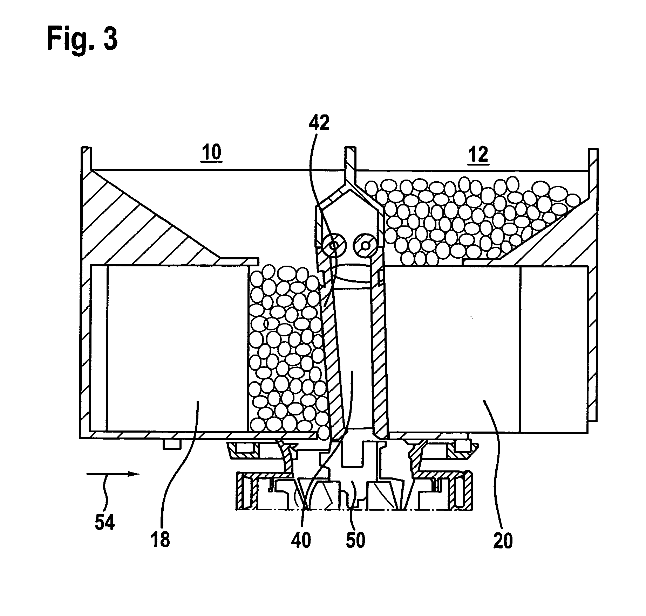

Die Fig. 2 und 3 verdeutlichen diesen Betriebsablauf der in der Fig. 1 strukturell gezeigten Vorrichtung am Beispiel einer Dosierung und einem nachfolgendem Austragen aus dem ersten Bohnenbehälter 10 (bzw. entsprechender Wirkung des linksseitigen Kolbens 18 für eine zugehörige Dosierkammer): Die Fig. 2 verdeutlicht einen Ausgangszustand, zu welchem, durch Antrieb des linksseitigen, ersten Kolbens 18 in der Pfeilrichtung 52 in Fig. 2, dieser Kolben sukzessive in linker Richtung verfährt und eine erst Dosierkammer 38 zum Eintragen von Bohnen A aus dem ersten Behälter 10 durch den bodenseitigen Auslass 11 freilegt. Dieser Bewegungsschritt entspricht in der Fig. 1 der Kurvenscheibenrotation (durch Antrieb der Motoreinheit 30) in linksseitiger Richtung zwischen den Positionen (a), entsprechend der Ausgangssituation, und (b), entsprechend einer vollständig für das gewünschte Dosiervolumen geöffneten Kammer 38. In der Fig. 5, Stufe (b), entspricht der gezeigte Drehwinkel von 90° gleichermaßen einer maximalen Öffnungsweite, welche, entsprechend geringeren Drehwinkeln, dann je nach jeweiliger Motoransteuerung auch kleiner bemessen werden kann.

In die so freigelegte Dosierkammer 38, einends begrenzt von der Kolbeneinheit 18 als linksseitiger, beweglicher Wand, und anderenends begrenzt von der durch Federkraft noch geschlossenen Klappe 42, gelangen dann Bohnen der Menge A durch Schüttung, wobei das Kammervolumen der (durch Kolbenbewegung bzw. Kolbenposition volumenvariablen) Dosierkammer 38 vollständig befüllt wird. Diesen Zustand, unmittelbar vor einem nachfolgenden Austragen, zeigt die Fig. 3: In der Kolben-Endposition ist die Dosierkammer 38 mit Bohnen vollständig gefüllt. Es erfolgt nunmehr ein Ansteuern der Kurvenscheibe 22 in der Gegenrichtung, also, bezogen auf die Fig. 5 aus der Position der Stufe (b) zurück in die Position (a), entsprechend einer Kolbenbewegung entlang Pfeilrichtung 54 in Fig. 3 (diese zeigt bereits den Beginn dieser Bewegung, die Kaffeemenge in der Dosierkammer 38 drückt gegen die Federklappe 42 und öffnet diese bereits leicht). Bei weiterer Bewegung bzw. zusätzlichem Krafteintrag bewegt sich dann der Kolben 18 zurück in eine horizontale Endposition, entsprechend der Position der Klappe 42, was bewirkt, dass die Dosierkammer vollständig durch den Kolben 18 selbst gefüllt wird und durch die Kolbenfläche die in der Kammer 38 enthaltene Kaffeecharge in Richtung auf den Auslass 40 bzw. bodenseitigen Auslass 50 zur bodenseitig anschließenden Mahleinheit ausgetragen wird. Durch die Anordnung der Dosierkammer bzw. der eine Leitwirkung auf die Bohnencharge ausübenden Klappe 42 im geöffneten Zustand (insoweit entsprechend der Position der Fig. 1) geschieht dieses Austragen einerseits durch Kraftwirkung der mit dem Kolben 18 angebotenen bewegbaren Wandfläche, darüber hinaus durch Schwerkraftwirkung nach abwärts zur (nicht gezeigten) Mahleinheit.

In konstruktiv besonders einfacher Weise ist damit das Ausführungsbeispiel der Fig. 1 - 5 nicht nur in der Lage, variabel und entsprechend dem vorliegenden Erfindungsprinzip durch Position des Kolbens (bewegbaren Wandabschnitts) eine Dosiermöglichkeit anzubieten, auch ist die Kolbenbewegung für beide im Ausführungsbeispiel den beiden Bohnenbehältern zugeordnete Kolben mittels lediglich einer gemeinsamen Antriebseinheit und einer gemeinsamen Motorik darstellbar: Wie etwa die Darstellung der Stufe (c) zur Fig. 5 verdeutlicht, lässt sich, analog zur Betriebsweise der linksseitigen, ersten Kammer 10 bzw. des zugehörigen Kolbens 18, ein äquivalenter Betrieb für den rechtsseitigen, zweiten Bohnenbehälter (Bohnenmenge B) bzw. den zugehörigen Kolben 20 realisieren, indem nämlich, gemäß Pfeilrichtung in Fig. 5 (c), ein Antrieb in entgegengesetzter Drehrichtung um bis zu 90° (wiederum entsprechend einer maximalen horizontalen Kolben-Verschiebeposition 20, und entsprechend maximaler Dosierkammeröffnung) erfolgt. Auch hier geschieht eine Feinpositionierung auf ggf. auch kleinere Dosiervolumina durch entsprechend kleineres, angesteuertes Drehwinkelmaß, und auch, wiederum analog zum Beispiel der Fig. 2, 3 für den linksseitigen Bereich des Ausführungsbeispiels, erfolgt das Austragen nach erfolgter Beschickung der so bemessenen Dosierkammer durch entgegengesetzten Antrieb des Kolbens, dadurch bewirkte Öffnung der (hier rechtsseitigen) Federklappe 44 und nachfolgendes, gravitatives Austragen zu den nachgeschalteten, bodenseitig anschließenden aggregaten Mahleinheit und, wiederum hier nachgeschaltet, der gemeinsamen Brüheinheit.

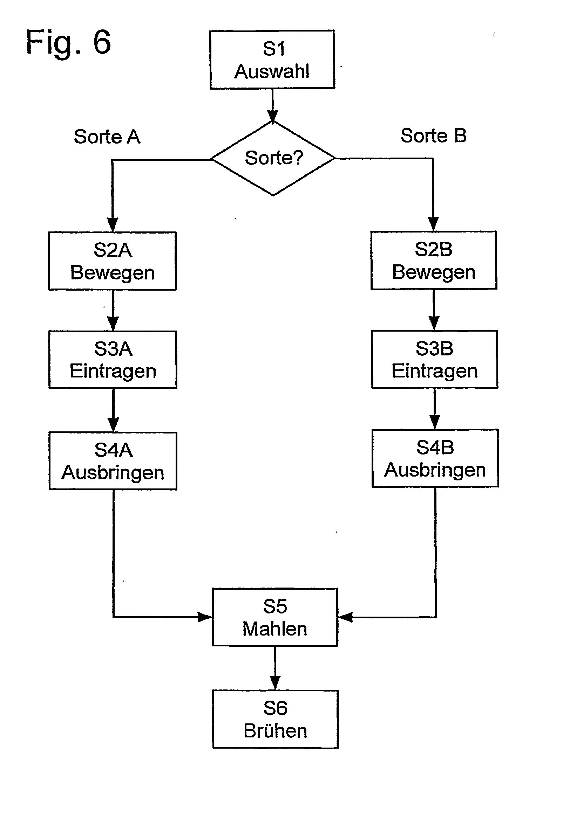

Die Fig. 6 zeigt diese beschriebenen Betriebsverfahren für den ersten bzw. den zweiten Bohnenbehälter mit zugehörigen Sorten A bzw. B, wobei der Schritt S2 (entsprechend einem jeweiligen, ausgewählten bzw. betreffenden Kolben) das Bewegen dieses Kolbens in eine Dosierposition und mithin das Bestimmen des jeweiligen Dosiervolumens vorsieht, daraufhin dann in Schritt S3 Bohnen aus einem zugeordneten Bohnenbehälter eingetragen werden und im nachfolgenden Schritt S4 durch Kolbenbewegung in entgegengesetzter Richtung ausgetragen werden.

Das darauffolgende Vermahlen der so dosierten Bohnencharge erfolgt in der gemeinsamen Mahleinheit in Schritt S5, erfindungsgemäß vorteilhaft ohne die Notwendigkeit, für ein gewünschtes Kaffeemehlvolumen diese Mahldauer zu kontrollieren. Vielmehr lässt sich in steuerungstechnisch deutlich vereinfachter Weise die durch die vorbeschriebene Dosierung vorgegebene Charge vollständig vermahlen und das Ende dieses Mahlens etwa durch eine Veränderung der Belastung auf das Mahlwerk (etwa durch Messen eines Mahlwerksmotor-Ankerstroms) feststellen.

Ergebnis ist, dass sortenreines Kaffeepulver, entsprechend der zugeführten sortenreinen Charge aus dem ersten oder zweiten Bohnenbehälter 10 oder 12 einem nachfolgenden Brühvorgang im Schritt S6 eines (in den Figuren nicht gezeigten) Brühwerks zugeführt wird, so dass entsprechend den vorgelagerten Betriebsstufen, ein sortenreines Heißgetränk gemäß der in Schritt S1 vom Benutzer getätigten Bohnensortenauswahl bereitet wird.

Die vorliegende Erfindung ist nicht auf das beschriebene konkrete Ausführungsbeispiel beschränkt.

Im Ergebnis ermöglicht es die vorliegende Erfindung gleichwohl, in überraschend einfacher und eleganter Weise das Problem von Restmengen bzw. unsauberen Dosierungen bei verschiedenen Kaffeesorten zu lösen, dabei konstruktive Einfachheit mit hoher Leistungsfähigkeit und minimierter Verschmutzung zu kombinieren und so die Voraussetzungen dafür zu schaffen, dass zukünftig weitere Anwendungsgebiete den erfindungsgemäßen Kaffee(voll-)Automaten erschlossen werden.

## Patentansprüche

1. Kaffeeautomat mit
einem ersten Bohnenbehälter (10) und einem zweiten, vom ersten Bohnenbehälter getrennt vorgesehenen Bohnenbehälter (12),
einer zum Mahlen von Bohnen aus dem ersten und dem zweiten Bohnenbehälter ausgebildeten Mahleinheit,
einer der Mahleinheit nachgeschalteten Brüheinheit für gemahlene Bohnen und
Fördermitteln (32, 34, 18, 20) zum selektiven Eintragen von Bohnen aus dem ersten und dem zweiten Bohnenbehälter in die Mahleinheit, wobei die als Dosiereinheit ausgebildeten Fördermittel mindestens eine mittels einer Antriebseinheit (30) volumenveränderliche, stationäre Dosierkammer (38) aufweisen,
deren Bohnen-Dosiervolumen durch einen der Dosierkammer zugeordneten, in eine variable Eintragsposition bewegbaren Wandabschnitt (18, 20) einstell- und/oder bestimmbar ist
und die Dosiereinheit Austragsmittel (18; 20) zum Entleeren der Dosierkammer zur Mahleinheit aufweist,
die durch eine Bewegung des bewegbaren Wandabschnitts aus der Eintragsposition das Austragen des Bohnen-Dosiervolumens bewirkt, **dadurch gekennzeichnet, dass**
die Antriebseinheit (30) für den kolbenartig bewegbaren Wandabschnitt (18, 20) mittels einer Kurvenscheibe (22) realisiert ist, welche weiterbildungsgemäß zum Antreiben einer Mehrzahl von kolbenartig bewegbaren Wandabschnitten einer Mehrzahl von Dosierkammern gemeinsam zugeordnet und ausgebildet ist.

2. Kaffeeautomat nach Anspruch 1,
**dadurch gekennzeichnet,**
**dass** das Bohnen-Dosiervolumen einer Portionierungsgröße des mit dem Kaffeeautomaten vorbestimmbaren Heißgetränks, insbesondere einer Bohnenmenge im Bereich zwischen 4 gr. und 40 gr., weiter bevorzugt zwischen 7 gr. und 20 gr., entspricht.

3. Kaffeeautomat nach Anspruch 1 oder 2,
**dadurch gekennzeichnet,**
**dass** die Dosierkammer oberhalb der Mahleinheit vorgesehen ist.

4. Kaffeeautomat nach einem der Ansprüche 1 bis 3,
**dadurch gekennzeichnet,**
**dass** Auslässe des ersten und des zweiten Bohnenbehälters zum gravitativen Eintragen in die Dosierkammer oberhalb derselben vorgesehen sind.

5. Kaffeeautomat nach einem der Ansprüche 1 bis 4,
**dadurch gekennzeichnet,**
**dass** der bewegbare Wandabschnitt (18; 20) die Dosierkammer dichtend, ausgebildet ist.

6. Kaffeeautomat nach einem der Ansprüche 1 bis 5,
**dadurch gekennzeichnet,**
**dass** die Dosierkammer eine zumindest abschnittsweise hohlzylindrische Form aufweist, einends stirnseitig zum Austragen zur Mahleinheit einen Auslass aufweist und gegenüberliegend der bewegbare Wandabschnitt in Richtung auf den Auslass bewegbar geführt ist.

7. Kaffeeautomat nach Anspruch 6,
**dadurch gekennzeichnet,**
**dass** dem Auslass Verschlussmittel (42, 44) zugeordnet sind, die in der Eintragsposition ein Austreten eingetragener Bohnen aus dem Auslass verhindern.

8. Kaffeeautomat nach Anspruch 7,
**dadurch gekennzeichnet,**
**dass** die Verschlussmittel als insbesondere gegen die Rückstellkraft von Federmitteln wirkende Klappenanordnung (42, 44) realisiert sind.

9. Kaffeeautomat nach einem der Ansprüche 1 bis 8,
**dadurch gekennzeichnet,**
**dass** die Fördermittel eine jeder der Mehrzahl der Bohnenbehälter zugeordnete, aus einem jeweiligen der Bohnenbehälter befüllbare Dosierkammer aufweisen, deren jeweiliger Auslass auf einen bevorzugt gemeinsamen Zuleitungsabschnitt (40) zur gemeinsamen Mahleinheit gerichtet ist.

10. Kaffeeautomat nach einem der Ansprüche 1 bis 9,
**dadurch gekennzeichnet,**
**dass** einer Mehrzahl der Dosierkammern jeweils zugeordnete, kolbenartig ausgebildete Wandabschnitte (18, 20) zum Austragen des jeweiligen Bohnen-Dosiervolumens aufeinander zu bewegbar angetrieben sind.

11. Kaffeeautomat nach einem der Ansprüche 1 bis 10,
**dadurch gekennzeichnet,**
**dass** eine Mehrzahl der kolbenartig bewegbaren Wandabschnitte einer Mehrzahl der Dosierkammern durch die Antriebseinheit als gemeinsame Antriebseinheit angetrieben ist.

12. Kaffeeautomat nach einem der Ansprüche 1 bis 11,
**dadurch gekennzeichnet,**
**dass** die Antriebseinheit einen elektrisch betreibbaren Motor (30) aufweist, dem Erfassungsmittel zum Erfassen einer absoluten oder relativen Motorposition so zugeordnet sind, dass ein Ausgangssignal der Erfassungsmittel das Bewegen des bewegbaren Wandabschnitts beeinflusst.

13. Kaffeeautomat nach einem der Ansprüche 1 bis 12,
**dadurch gekennzeichnet,**
**dass** der Mahleinheit Mittel zum Erfassen eines Mengenparameters der gemahlenen Bohnen, insbesondere eines Mehlvolumens oder eines Mehlgewichts, sowie zum Erzeugen eines Erfassungssignals daraus nachgeschaltet sind,
die Dosiereinheit zum Eintragen des als Reaktion auf ein Dosiersteuersignal veränderbaren Bohnen-Dosiervolumens in die Mahleinheit ansteuerbar ist
und der Kaffeeautomat Steuermittel aufweist, die zum Vergleichen des Erfassungssignals aus einem ersten, durch die Dosiereinheit dosierten Bohnen-Dosiervolumens mit einem Vorgabesignal sowie zum Erzeugen des Dosiersteuersignals für ein nachfolgend zu dosierendes zweites Bohnen-Dosiervolumen als Reaktion auf das Vergleichen ausgebildet sind.

14. Verfahren zum Betreiben des Kaffeeautomaten nach einem der Ansprüche 1 bis 13, **gekennzeichnet durch** die Schritte:
- Einstellen eines Bohnen-Dosiervolumens **durch** einen einer Dosierkammer zugeordneten, in eine variable Eintragsposition bewegbaren Wandabschnitt (18, 20) der Dosierkammer,
- Eintragen des Bohnen-Dosiervolumens in die Dosierkammer,
- Austragen des Bohnen-Dosiervolumens aus einem Auslass der Dosierkammer zur Mahleinheit **durch** Bewegung des bewegbaren Wandabschnitts (18, 20) aus der Eintragsposition in Richtung auf den Auslass.

## Claims

1. Coffee machine comprising
a first bean container (10) and a second bean container (12) which is separate from the first bean container,
a grinding unit which is designed to grind beans from the first and the second bean containers,
a brewing unit, downstream of the grinding unit, for ground beans and
conveying means (32, 34, 18, 20) for selectively feeding beans from the first and the second bean containers into the grinding unit, the conveying means, which are designed as a metering unit, having at least one stationary metering chamber (38), the volume of which can be varied by means of a drive unit (30),
the bean metering volume of which metering chamber being able to be set and/or determined by means of a wall portion (18, 20) which can be moved into a variable feed position and is assigned to the metering chamber
and the metering unit having discharge means (18; 20) for emptying the metering chamber to the grinding unit,
which means causing the bean metering volume to be discharged by moving the movable wall portion out of the feed position, **characterised in that**
the drive unit (30) for the wall portion (18, 20), which is movable in a piston-like manner, is produced by means of a cam disc (22), which, according to a development, is assigned and designed to drive a plurality of wall portions, which are movable in a piston-like manner, of a plurality of metering chambers at the same time.

2. Coffee machine according to claim 1, **characterised in that** the bean metering volume corresponds to a portioning size of the hot beverage, which is predeterminable using the coffee machine, in particular to a bean quantity in the range of between 4 grams and 40 grams, more preferably between 7 grams and 20 grams.

3. Coffee machine according to either claim 1 or claim 2, **characterised in that** the metering chamber is provided above the grinding unit.

4. Coffee machine according to any of claims 1 to 3, **characterised in that** the outlets of the first and of the second bean containers are provided above the metering chamber for gravitational feeding into said metering chamber.

5. Coffee machine according to any of claims 1 to 4, **characterised in that** the movable wall portion (18; 20) is designed to seal the metering chamber.

6. Coffee machine according to any of claims 1 to 5, **characterised in that** the metering chamber has a hollow cylindrical shape, at least in portions, one end having on its end face an outlet for discharging to the grinding unit and on the opposite end, the movable wall portion being movably guided towards the outlet.

7. Coffee machine according to claim 6, **characterised in that** the outlet is assigned closure means (42, 44) which, in the feed position, prevent fed-in beans from escaping from the outlet.

8. Coffee machine according to claim 7, **characterised in that** the closure means are implemented as a flap arrangement (42, 44) which acts in particular against the restoring force of spring means.

9. Coffee machine according to any of claims 1 to 8, **characterised in that** the conveying means have a metering chamber which can be filled from one of the bean containers and is assigned to each of the plurality of bean containers, the respective outlets of which metering chamber are directed towards a preferably common supply portion (40) for the common grinding unit.

10. Coffee machine according to any of claims 1 to 9, **characterised in that** wall portions (18, 20), which are designed in a piston-like manner and are assigned to a plurality of metering chambers in each case, are movably driven towards one another in order to discharge the respective bean metering volumes.

11. Coffee machine according to any of claims 1 to 10, **characterised in that** a plurality of wall portions, which are movable in a piston-like manner, of a plurality of metering chambers is driven by the drive unit as a common drive unit.

12. Coffee machine according to any of claims 1 to 11, **characterised in that** the drive unit has an electrically operable motor (30), to which detection means for detecting an absolute or relative motor position are assigned such that an output signal of the detection means influences the movement of the movable wall portion.

13. Coffee machine according to any of claims 1 to 12, **characterised in that** means for detecting a quantity parameter of the ground beans, in particular a powder volume or a powder weight, and for generating a detection signal therefrom are arranged downstream of the grinding unit,
the metering unit can be actuated to feed the bean metering volume, which can be varied in response to a metering control signal, into the grinding unit
and the coffee machine has control means which are designed to compare the detection signal from a first bean metering volume, which is metered by the metering unit, with a preset signal and to generate the metering control signal for a second bean metering volume, to be metered subsequently, in response to the comparison.

14. Method for operating the coffee machine according to any of claims 1 to 13, **characterised by** the steps of:
- setting a bean metering volume by means of a wall portion (18, 20) of the metering chamber, which portion can be moved into a variable feed position and is assigned to a metering chamber,
- feeding the bean metering volume into the metering chamber,
- discharging the bean metering volume from an outlet of the metering chamber to the grinding unit by moving the movable wall portion (18, 20) out of the feed position towards the outlet.

## Revendications

1. Distributeur automatique de café avec
un premier réservoir de grains (10) et un deuxième réservoir de grains (12) prévu séparément du premier réservoir de grains, une unité de broyage constituée pour moudre des grains en provenance du premier et deuxième réservoir de grains,
une unité d'infusion pour les grains moulus placée en aval de l'unité de broyage, et
des moyens d'acheminement (32, 34, 18, 20) pour l'introduction sélective dans l'unité de broyage de grains en provenance du premier et deuxième réservoir de grains, dans lequel les moyens d'acheminement constitués en tant qu'unité de dosage présentent au moins une chambre de dosage (38) stationnaire dont le volume peut varier au moyen d'une unité d'entraînement (30),
chambre de dosage dont le volume de dosage en grains peut être réglé et/ou déterminé par un tronçon de paroi (18, 20) affecté à la chambre de dosage et pouvant être déplacé dans une position d'introduction variable,
et l'unité de dosage présente des moyens d'extraction (18 ; 20) pour le vidage de la chambre de dosage vers l'unité de broyage,
qui provoque, par un mouvement du tronçon de paroi mobile à partir de la position d'introduction, l'extraction du volume de dosage de grains,
**caractérisé en ce que**
l'unité d'entraînement (30) pour le tronçon de paroi (18 ; 20) mobile à la façon d'un piston est réalisée au moyen d'une came (22) qui, conformément au développement, est constituée et affectée pour l'entraînement commun d'une pluralité de tronçons de paroi mobiles à la façon d'un piston d'une pluralité de chambres de dosage.

2. Distributeur automatique de café selon la revendication 1,
**caractérisé en ce que**
le volume de dosage de grains correspond à une dimension de division en portions de la boisson chaude pouvant être prédéfinie avec le distributeur automatique de café, en particulier à une quantité de grains dans la plage entre 4 grammes et 40 grammes, plus préférentiellement entre 7 grammes et 20 grammes.

3. Distributeur automatique de café selon la revendication 1 ou 2,
la chambre de dosage est prévue au-dessus de l'unité de broyage.

4. Distributeur automatique de café selon l'une des revendications 1 à 3,
**caractérisé en ce**
**qu'**il est prévu des sorties du premier et du deuxième réservoir de grains pour l'introduction par gravité dans la chambre de dosage au-dessus de celle-ci.

5. Distributeur automatique de café selon l'une des revendications 1 à 4,
**caractérisé en ce que**
le tronçon de paroi (18 ; 20) mobile est constitué pour rendre la chambre de dosage étanche.

6. Distributeur automatique de café selon l'une des revendications 1 à 5,
**caractérisé en ce que**
la chambre de dosage présente une forme de cylindre creux au moins par tronçons, présente à une extrémité côté frontal une sortie pour l'extraction vers l'unité de broyage et, en face, le tronçon de paroi mobile est guidé de façon mobile en direction de la sortie.

7. Distributeur automatique de café selon la revendication 6,
**caractérisé en ce que**
des moyens d'obturation (42, 44) sont affectés à la sortie et empêchent, dans la position d'introduction, les grains introduits de partir par la sortie.

8. Distributeur automatique de café selon la revendication 7,
**caractérisé en ce que**
les moyens d'obturation sont réalisés en tant que dispositif à clapet (42, 44) agissant en particulier contre la force de rappel de moyens de ressort.

9. Distributeur automatique de café selon l'une des revendications 1 à 8,
**caractérisé en ce que**
les moyens d'acheminement présentent une chambre de dosage affectée à chacun de la pluralité des réservoirs de grains et pouvant être remplie à partir d'un réservoir respectif des réservoirs de grains, chambre de dosage dont la sortie respective est dirigée vers un tronçon de conduite d'amenée (40) de préférence commune vers l'unité de broyage commune.

10. Distributeur automatique de café selon l'une des revendications 1 à 9,
**caractérisé en ce que**
des tronçons de paroi (18, 20) constitués à la façon d'un piston et affectés respectivement à une pluralité des chambres de dosage sont entraînés de façon mobile les uns vers les autres pour l'extraction du volume de dosage de grains respectif.

11. Distributeur automatique de café selon l'une des revendications 1 à 10,
**caractérisé en ce**
**qu'**une pluralité des tronçons de paroi mobiles à la façon d'un piston d'une pluralité des chambres de dosage est entraînée par l'unité d'entraînement en tant qu'unité d'entraînement commune.

12. Distributeur automatique de café selon l'une des revendications 1 à 11,
**caractérisé en ce que**
l'unité d'entraînement présente un moteur (30) pouvant fonctionner électriquement auquel sont affectés des moyens de détection pour la détection d'une position de moteur absolue ou relative de telle sorte qu'un signal de sortie des moyens de détection influence le mouvement du tronçon de paroi mobile.

13. Distributeur automatique de café selon l'une des revendications 1 à 12,
**caractérisé en ce que**
des moyens sont montés en aval de l'unité de broyage pour la détection d'un paramètre de quantité des grains moulés, en particulier d'un volume de mouture ou d'un poids de mouture, ainsi que pour la production d'un signal de détection à partir de ce paramètre, l'unité de dosage peut être pilotée pour l'introduction dans l'unité de broyage du volume de dosage de grains variable en réaction à un signal de commande de dosage,
et le distributeur automatique de café présente des moyens de commande qui sont constitués pour la comparaison du signal de détection à partir d'un premier volume de dosage de grains dosé par l'unité de dosage avec un signal de consigne ainsi que pour la production du signal de commande de dosage pour un deuxième volume de dosage de grains à doser ensuite en réaction à la comparaison.

14. Procédé de fonctionnement du distributeur automatique de café selon l'une des revendications 1 à 13, **caractérisé par** les étapes suivantes :
- réglage d'un volume de dosage de grains par un tronçon de paroi (18, 20) affecté à une chambre de dosage et pouvant être déplacé dans une position d'introduction variable,
- introduction du volume de dosage de grains dans la chambre de dosage,
- extraction du volume de dosage de grains à partir d'une sortie de la chambre de dosage vers l'unité de broyage par le mouvement du tronçon de paroi (18, 20) mobile à partir de la position d'introduction en direction de la sortie.
